# EUROPEAN PATENT APPLICATION

(11) **EP 2 047 933 A2**
(43) Date of publication of application: **15.04.2009**
(21) Application number: 08252241.8
(22) Date of filing: 01.07.2008
(51) Int. Cl.: B23D 51/03

(54) **Saw having a storable blade**

(30) Priority: 10.10.2007 US 870036
(71) Applicant: Techtronic Industries Company Limited, Tsuen Wan New Territories Hong Kong (CN)
(72) Inventor: Chan, Ka Ki, Kowloon, Hong Kong (HK); Ho, Chi Hong, Kwai Chung, New Territories, Hong Kong (HK); Larson, Dan, Central, Hong Kong (HK)
(74) Representative: Martin, David John

(57) **Abstract**

A storable blade (30) for use with a saw, such as a jigsaw (10). The blade (30) has stored and operative positions. In the stored position, the blade is disposed in the housing (12), and in the operative position, the blade is in the cutting position. In either the operative or the stored positions, the saw blade (30) is coupled with the jigsaw (10).

## Description

### BACKGROUND

The present invention relates to saws having a storable blade, and more specifically, to a jigsaw having a blade that is storable while still coupled with the jigsaw.

Most jigsaws that are produced today have a tool-less blade clamp that enables a user to clamp/unclamp a blade from the blade clamp without using tools. This feature enables users to quickly replace, remove, or install blades. However, the current jigsaws require that the blade be removed when the user wishes to store the jigsaw.

### SUMMARY

According to a first aspect the present invention provides a saw comprising a housing having a front portion, a shoe coupled with the housing, a motor disposed in the housing having a rotary output shaft, a saw bar disposed in the front portion of the housing and having a first end and a second end that defines a longitudinal axis, the saw bar being coupled to the output shaft, a blade clamp coupled with the second end of the saw bar, and a saw blade coupled with the blade clamp and selectively movable between a stored position and an operative position.

In one embodiment, the saw blade is disposed within a portion of the shoe when in the stored position. In the operative position it may be substantially parallel with the longitudinal axis and in the stored position the saw blade is substantially non-parallel with the longitudinal axis.

A biasing member may be provided coupled with the blade clamp to bias the saw blade towards the shoe. A retaining arm may be pivotably coupled with the housing with a first end adjacent to the saw blade and having a first position and a second position that correspond with the stored position and the operative position of the saw blade. A shaft may be provided having a first end including a cam portion engaged with the retaining arm and a second end including a selector that causes the retaining arm to pivot. A locking mechanism may lock the saw blade in one of a stored and operative position.

In one version the saw blade is stored in the front portion of the housing when the saw blade is in the stored position. A biasing member biases the saw blade towards the operative position. A locking member serves to retain the blade within the front portion of the housing when the saw blade is in the stored position, the locking mechanism comprising a clamp having a first face and a second face, where the saw blade is adapted to fit therebetween.

In an alternative version the blade clamp is slidlingly coupled with the saw bar. The sliding mechanism has a first portion and a second portion, where the first portion is engaged with the blade clamp and the second portion is slidingly engaged with the saw bar. The sliding mechanism further comprises a pin slidingly engaged with the saw bar. It may be arranged that there are notches including a first notch and a second notch disposed along the saw bar, each notch configured to engage with a portion of the pin, such that when the pin is engaged with the first notch, the saw blade is in the stored position and is substantially disposed within the front portion of the housing, and when the pin is engaged with the second notch, the saw blade is in the operative position and is disposed substantially below the front part of the housing. A biasing member may bias the pin towards the saw bar.

In a still further version the saw bar is configured to receive the saw blade such that in the operative position the saw blade is at least partially extended from the second end of the saw bar and when in the stored position the saw blade is disposed within the saw bar. The blade clamp may then comprise a first end and a second end, where the first end has a threaded portion and is threadingly engaged with the saw bar and the second end is configured to couple with the saw blade, such that rotation of the saw bar in a first direction retracts the saw blade within the second end of the saw bar to the stored position, and the rotation of the saw bar in a second direction extrudes the blade clamp and the saw blade from the second end of the saw bar to the operative position. A motor may be coupled with the saw bar, such that the motor rotates the saw bar about the longitudinal axis of the saw bar, in either the first direction or the second direction. A motor may be coupled with the saw bar such that the motor rotates the saw bar about the longitudinal axis of the saw bar.

### BRIEF DESCRIPTION OF THE DRAWINGS

Figure 1 is a perspective view of one embodiment of a portion of the saw according to the present invention where the saw is a jigsaw.

Figure 2 is a front view of the selector knob useful in the saw shown in Figure 1.

Figure 3 is a perspective view of certain structural features of the saw shown in Figure 1.

Figure 4 is a perspective view of a portion of another embodiment of a saw according to the present invention.

Figure 5 is a perspective view of certain structural features of one embodiment of a biasing member useful in the saw shown in Figure 4.

Figure 6 is a perspective view of certain structural features of one embodiment of a biasing member useful in the saw shown in Figure 4.

Figure 7 is a perspective view of certain structural features of one embodiment of a biasing member useful in the saw shown in Figure 4.

Figure 8 is a perspective view of a blade lock useful with the saw shown in Figure 4.

Figure 9 is a perspective view of one embodiment of a locking arm useful with the saw of the present invention with the blade clamp shown in an unlocked position.

Figure 10 is a perspective view of the locking arm of Figure 9 with the blade clamp shown in a locked position.

Figure 11 is a perspective view of another embodiment of a portion of a saw having a storable blade and a sliding mechanism according to the present invention.

Figure 12 is a perspective view of one aspect of the saw shown in Figure 11 showing an alternative configuration of the sliding mechanism.

Figure 13 is a perspective view of another embodiment of a saw having a storable blade according to the present invention.

Figure 14 is a perspective view of another embodiment of a saw having a storable blade according to the present invention.

### DETAILED DESCRIPTION OF EMBODIMENTS

The invention is described with reference to the drawings in which like elements are referred to by like numerals. The relationship and function of the various elements of this invention are better understood by the following description. Each aspect so defined may be combined with any other aspect or aspects unless clearly indicated to the contrary. The embodiments described below are by way of example only, and the invention is not limited to the embodiments illustrated in the drawings.

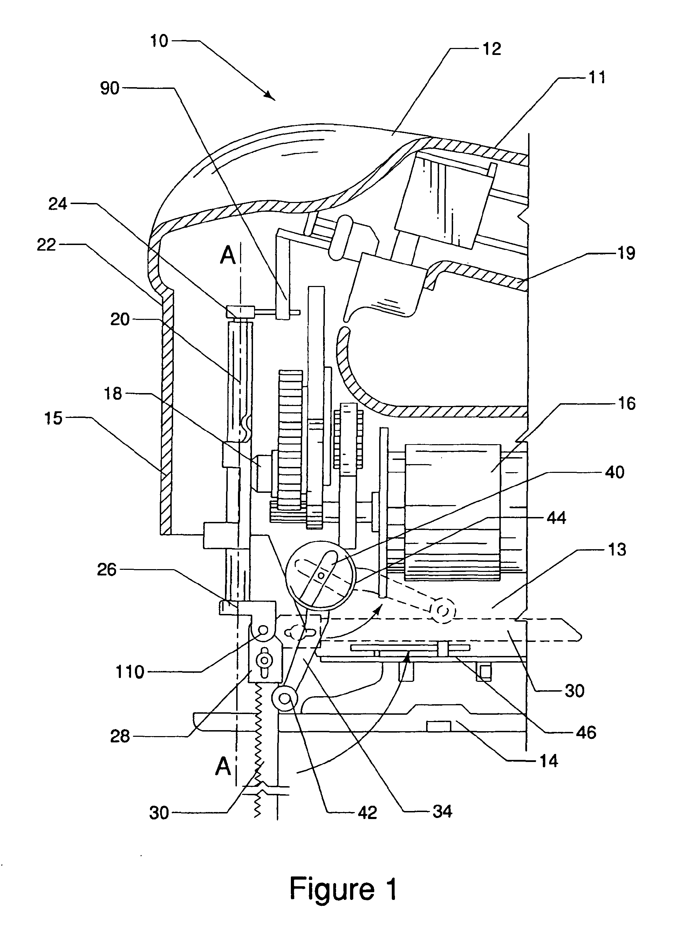

Turning now to the drawings and referring to FIG. 1 a saw is shown. For ease of reference and description, the inventive concepts are shown as configured with a jigsaw. It is to be understood, however, that the principles of the present invention can be applied to a variety of saws. Therefore, while the present invention will be described in connection with a jigsaw, the invention is not so limited. The jigsaw 10 has a top 11, a bottom 13, a front 15, and a rear. The top 11 has a handle 19 so that the jigsaw 10 can be grasped and manipulated by the user. The front 15 of the housing 12 defines an area from which a saw blade 30 extends. The bottom 13 of the housing 12 is coupled to a shoe 14. The shoe 14 may be an independent part that is attached to the housing 12, or may be integral therewith. Disposed within the housing 12 is a motor 16. The motor 16 is coupled with a rotary output shaft 18. A saw bar 20 is coupled to the rotary output shaft 18, so that the saw bar 20 is disposed in a front portion 22 of the housing 12. The saw bar 20 reciprocates along a longitudinal axis A, and has a first end 24 and a second end 26. A blade clamp 28 is coupled with the second end 26 of the saw bar 20 and is coupled with the saw blade 30.

Some of the embodiments will now be discussed, and as a reference, the saw blade 30 of each embodiment has a stored position and an operative position. The operative position coincides with the saw blade 30 being in a use, or cutting position, as shown in FIG. 1. The stored position coincides with the saw blade 30 being in a non-cutting position, yet still coupled to the saw bar 20 and the blade clamp 28.

In one embodiment, the blade clamp 28 is pivotally coupled to the second end 26 of the saw bar 20 about a pin 110, and is capable of being rotated towards the shoe 14, as shown in FIG. 1. A biasing member 32, such as a torsion spring, is coupled between the blade clamp 28 and the second end 26 of the saw bar 20 to bias the blade clamp 28 and the saw blade 30 towards the shoe 14, and into the stored position, as indicated by the phantom lines in FIG. 1. In the stored position, the saw blade 30 is at least partially disposed within the shoe 14. It will be appreciated that in the stored position, the saw blade 30 remains coupled to the second end 26 of the saw bar 20.

A locking mechanism 46 is disposed within the shoe 14 to retain the saw blade 30 in the stored position. The locking mechanism 46 may be a clamp with a first face and a second face, so that the saw blade 30 can be stored between the first face and the second face. A release mechanism or button may be coupled with the locking mechanism 46 to release the saw blade 30.

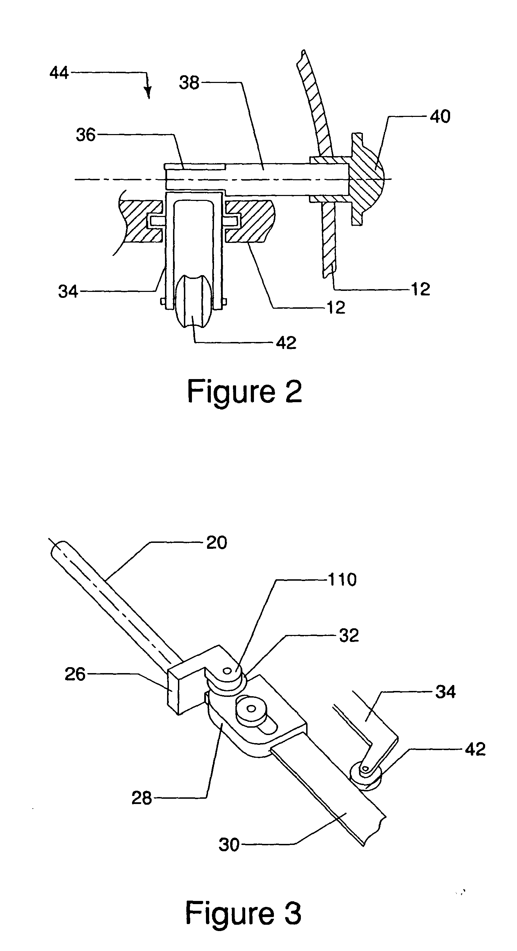

As shown in FIG. 1, an orbital wheel assembly 44 is disposed within the housing 12. As better shown in FIGS. 2 and 3, the orbital wheel assembly 44 includes a retaining arm 34 that is pivotally coupled with a cam portion 36 of a shaft 38. A selection knob 40 is coupled with the shaft 38. The retaining arm 34 may further include a rotatable member 42, such as a wheel, as shown in FIG. 3 that can contact a portion of the saw blade 30.

To operate the jigsaw 10, the blade 30 is moved from the stored position by actuating the locking mechanism 46. The selection knob 40 is actuated, which causes the retaining arm 34 to rotate about the shaft 38. A portion of the retaining arm 34 is adjacent to the saw blade 30, as shown in FIG. 3, and causes the saw blade 30 and the blade clamp 28 to rotate about the saw bar 20, to the operative position. Once the longitudinal axis A of the saw bar 20 is substantially collinear with the saw blade 30, the saw blade 30 is in the operative position. In the operative (and substantially parallel) position, the user may operate the jigsaw 10. It can also be appreciated that the retaining arm 34 can be located in a position between the stored and operative positions, to enable the blade 30 to be orientated at an angle during the cutting process.

To store the blade 30, the selection knob 40 is rotated to cause the retaining arm 34 to pivot towards the shoe 14. Because the biasing member 32 biases the saw blade 30 toward the shoe 14, the saw blade 30 remains adjacent to the retaining arm 34 as the retaining arm 34 pivots. Once the saw blade 30 is disposed within the shoe 14, a locking mechanism 46 may lock the blade 30 within the shoe 14.

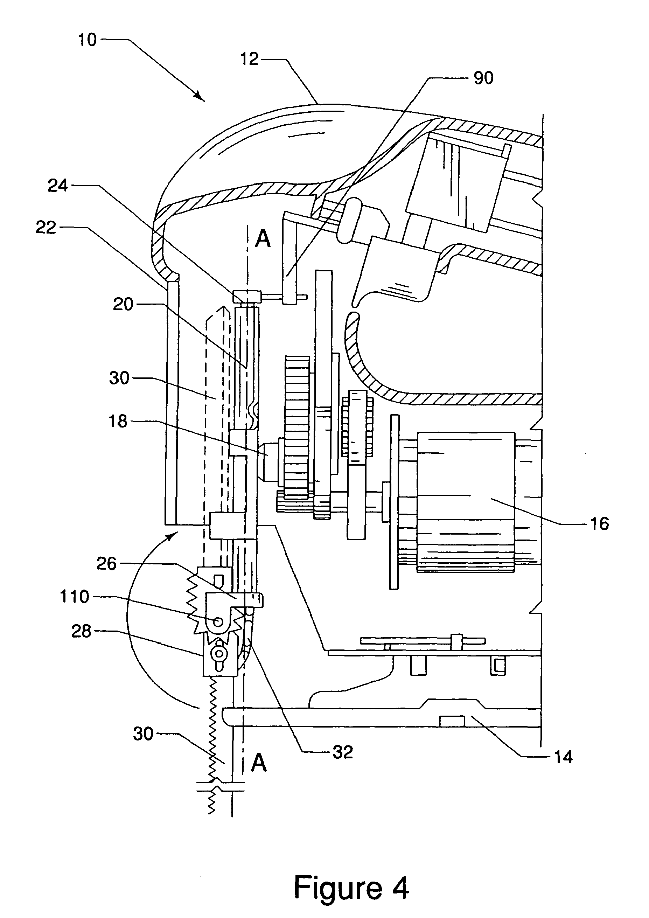

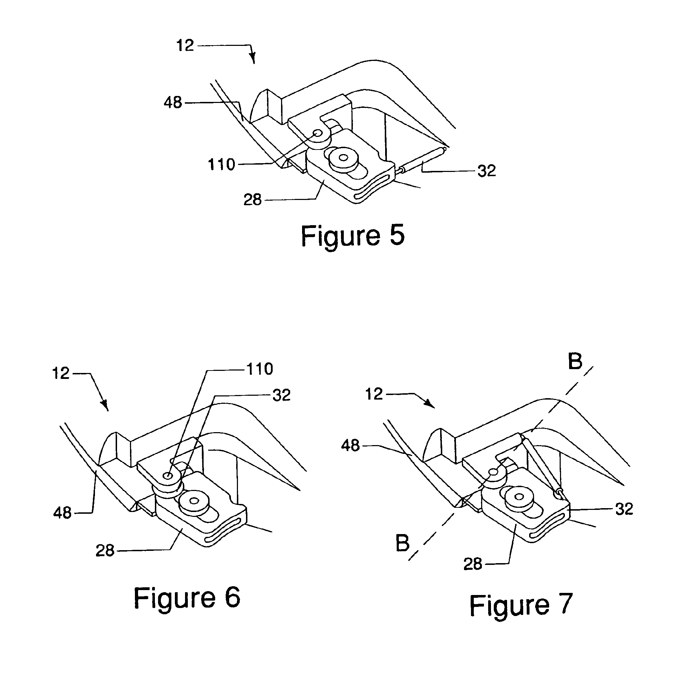

In another embodiment, as shown in FIG. 4, the blade clamp 28 is pivotable about the saw bar 20 toward the front portion 22 of the housing 12 through the pin 110. In this embodiment, the blade clamp 28 is partially pivotable from an operative position, where the longitudinal axis A of the saw bar 20 is substantially parallel with the saw blade 30, to a stored position, where the saw blade 30 is disposed, at least partially, within the front portion 22 of the housing 12 (and substantially parallel to the saw bar 20). The biasing member 32, shown as an extension spring in FIG. 5, is coupled with the blade clamp 28 and is configured to bias the blade clamp 28 towards the operative position. The biasing member 32 may also take the form of a torsion spring that is coupled between the saw bar 20 and the blade clamp 28, as shown in FIG. 6, or an extension spring that is coupled with the blade clamp 28 and the saw bar 20, as shown in FIGS. 4 and 7.

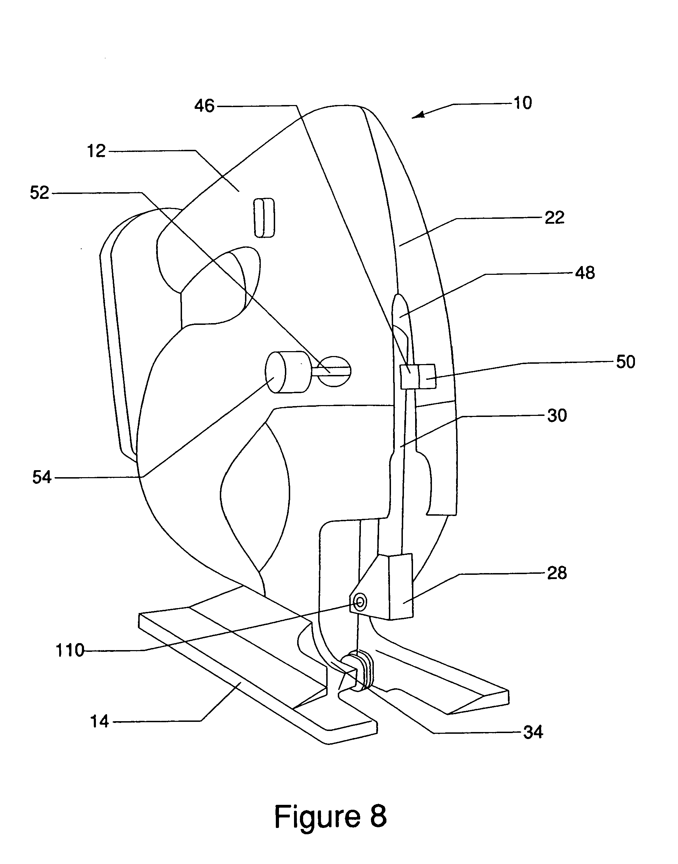

Disposed within the front portion 22 of the housing 12 is a locking mechanism 46, as illustrated in FIG. 8. The locking mechanism 46 may be located adjacent to an opening 48 in the front portion 22 of the housing 12. The locking mechanism 46 may include a blade lock 50 that is adjacent to the opening 48 of the housing 12. The blade lock 50 may be a "U" shaped clamping member that is capable of accepting and retaining the saw blade 30. Coupled with the blade lock 50 is a shaft 52. A biasing member (not shown) is disposed about the shaft 52, to bias the shaft 52 into a locking position. Disposed on one end of the shaft 52 is a push knob 54.

To operate the jigsaw 12, the push knob 54 can be depressed to cause the shaft 52 to displace the blade lock 50 and release the saw blade 30 from the stored position. The biasing member 32 causes the saw blade 30 to rotate toward the shoe 14 to a position where the saw blade 30 is substantially parallel with the longitudinal axis A of the saw bar 20, and in the operative position. The force produced by the biasing member 32 and the force created by the cutting operation retains the saw blade 32 in a position substantially parallel with the longitudinal axis A of the saw bar 20.

Alternatively, as shown in FIG. 7, when the biasing member 32 is an extension spring coupled with the saw bar 20 and the blade clamp 28, the blade lock 50 is not necessary to retain the blade 30 in the stored position. Instead, the extension spring, which is coupled with the blade clamp 28 and the saw bar 20, produces a biasing force towards the operative position when the blade 30 and the blade clamp 28 are located in a position below line B-B, as shown in FIG. 7. Once the saw blade 30 and the blade clamp 28 are pivoted above the position indicated by line 1-1, the direction of the biasing force produced by the extension spring biases the blade clamp 28 towards the stored position. Accordingly, there is no need for an additional locking mechanism to retain the blade 30 in the stored position.

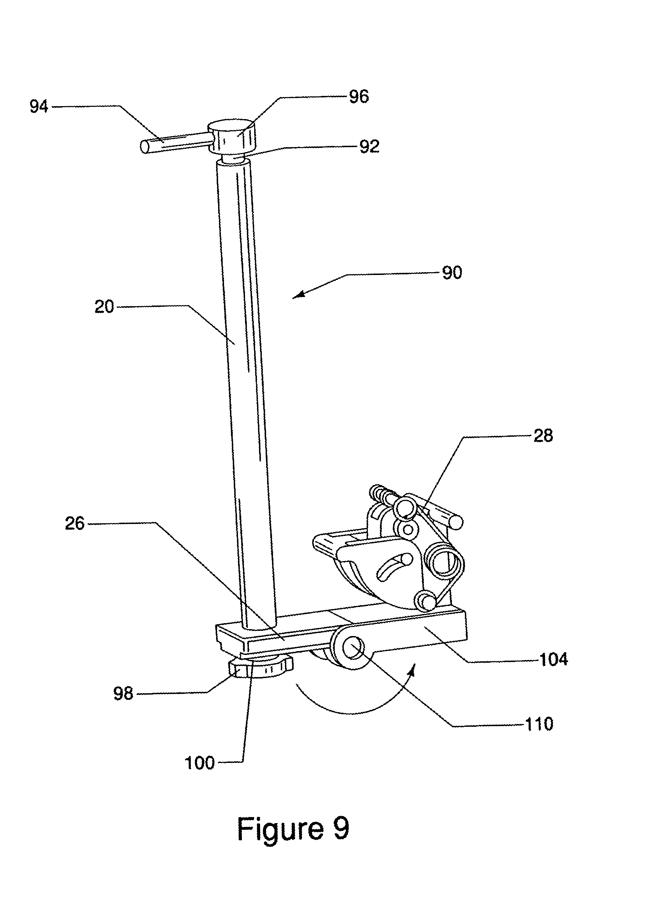

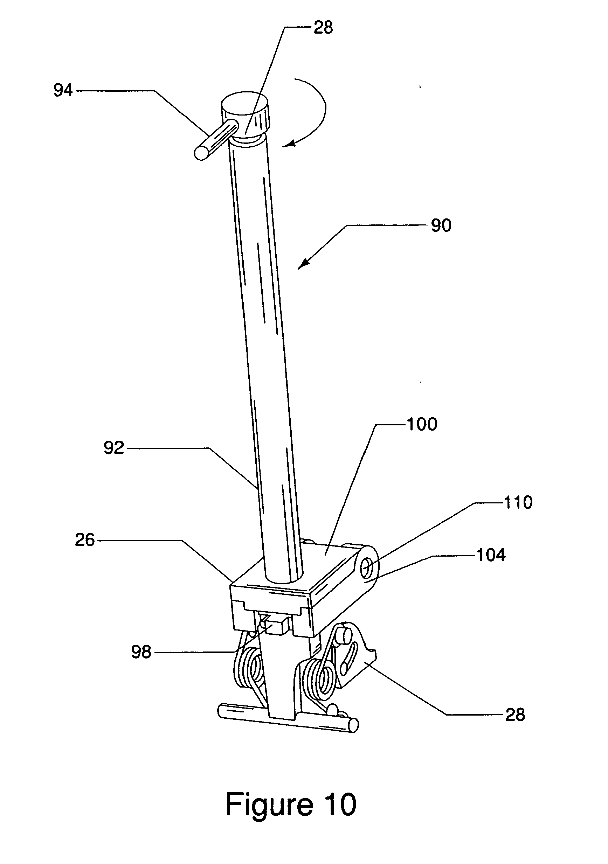

A locking arm 90 may be incorporated with either of the two embodiments discussed above. The locking arm 90, as shown in FIG. 9, has a shaft 92 disposed within the saw bar 20 with an arm 94 connected to its first end 96 and a plate 98 connected to its second end 100. A portion 104 of the blade clamp 28 is pivotally engaged with the second end 26 of the saw bar 20 by the pin 110. The portion 104 of the blade clamp 28 is also configured to couple with the saw blade 30. A biasing member may be coupled between the second end 26 of the saw bar 20 and the portion 104 of the blade clamp 28. The portion 104 of the blade clamp 28 can be secured to the second end 26 of the saw bar 20 through the rotation of the shaft 92. The rotation of the shaft 92 also rotates the plate 98, thereby retaining the portion 104 of the blade clamp 28 adjacent to the second end of the saw bar 20, as shown in FIG. 10.

This ability to lock the blade clamp 28 with the saw bar 20 eliminates the need of the orbital wheel assembly 44 in the first embodiment, or the force created during the cutting process to retain the saw blade 30 in the operative position.

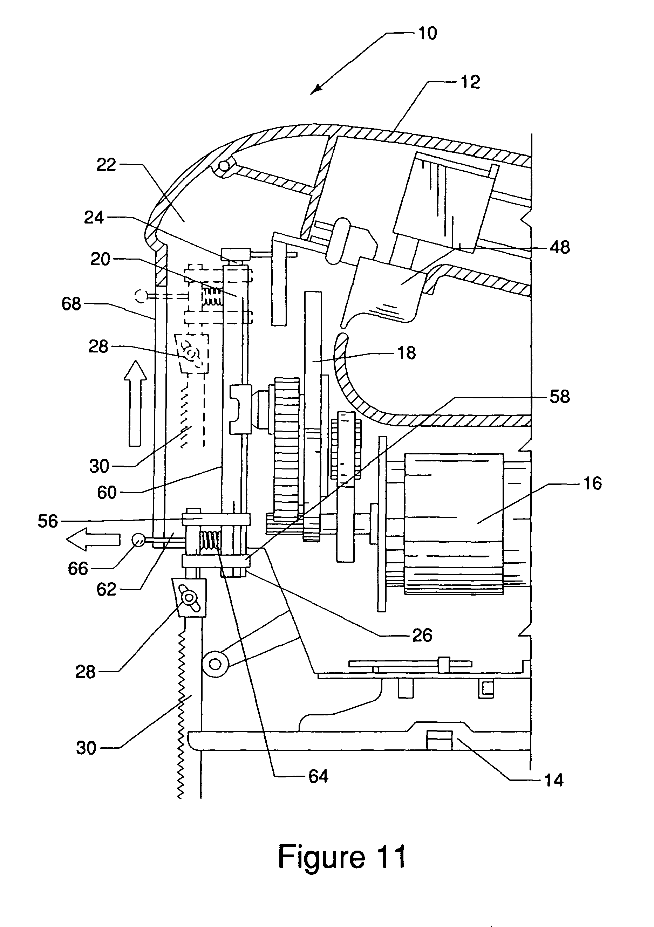

In yet another embodiment, as shown in FIG. 11, the blade clamp 28 is coupled to the saw bar 20 through a sliding mechanism 56, such that the blade clamp 28 can slide along a path parallel to the saw bar 20. The sliding mechanism 56, as shown, has a set of apertures 58 that slidingly receive the saw bar 20. However, the number and shape of apertures may vary, and it is also contemplated that the apertures 58 may be replaced with a channel system where a ridge extending from the sliding mechanism 56 would engage a channel embedded in the saw bar 20.

The saw bar 20 further includes a series of notches 60, or apertures, as shown in FIG. 11. The notches 60 may be located, for example, at both ends of the saw bar 20, or anywhere therebetween. The notches 60 may have, without limitation, a circular, rectangular, or triangular shape. A shaft 62 is partially disposed within the sliding mechanism 56 and is designed to engage the notches 60 of the saw bar 20. A biasing member 64 may be disposed around the shaft 62 to allow the shaft 62 to remain engaged with a notch 60. A pull knob 66 may also be attached to one end of the shaft 62. The pull knob 66 may also extend beyond the front portion 22 of the housing 12, through a slot 68, to enable the user to actuate the sliding mechanism 56.

To operate the jigsaw 10, the sliding mechanism 56 and the saw blade 30 are moved from a stored position to an operative position. In the stored position, the sliding mechanism 56 is engaged to one of the notches 60 disposed on the upper portion of the saw bar 20. In this position, the saw blade 30 is substantially disposed within the front portion 22 of the housing 12, as shown in phantom lines in FIG. 11. The shaft 62 is retracted from a selected notch 60 by pulling the pull knob 66 away from the saw bar 20. Once the shaft 62 is retracted from the selected notch 60, the sliding mechanism 56 is moved relative to the saw bar 20 to a position such that the shaft 62 is aligned with another notch 60. For example, the user may align the shaft 62 with the notch 60 located at the second end 26 of the saw bar 20. Once the shaft 62 is substantially aligned with the other notch 60, the shaft 62 is released, and the biasing force produced by the biasing member 64 causes a portion of the shaft 62 to engage the aperture 60. In this position, the saw blade 30 is in the operative position, as shown in solid lines in FIG. 11.

The cutting depth of the saw blade 30 may be varied by engaging the sliding mechanism 56 with one of the intermediate notches 60 located between the first end 24 and the second end 26 of the saw bar 20.

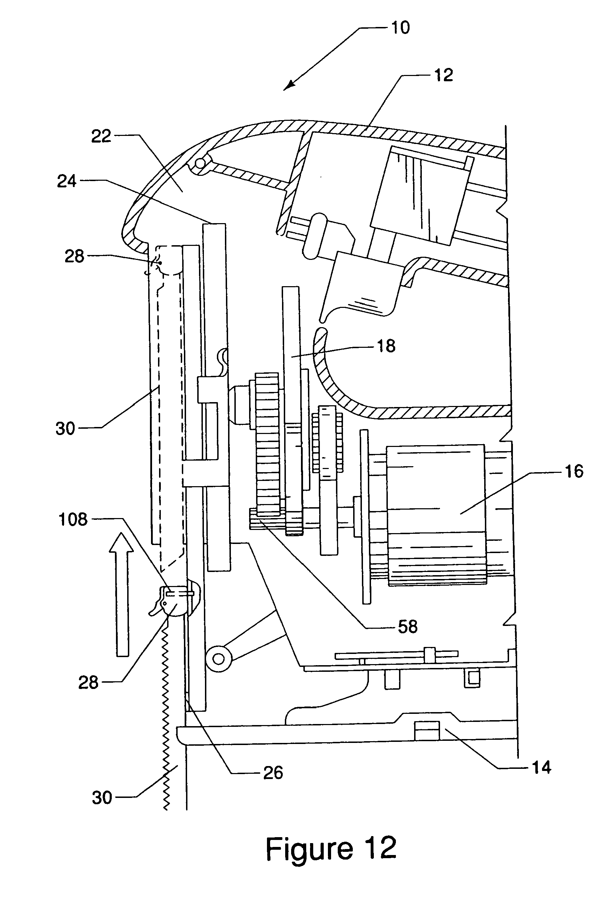

The sliding mechanism 56 may also incorporate a latch and detent configuration as shown in FIG. 12, where the sliding mechanism 56 may have a spring-biased latch 108 that is configured to engage a series of notches 60 disposed along the saw bar 20. In this configuration, a portion of the latch 108 is depressed to release the latch 108 from a particular notch 60 and the sliding mechanism 56 is moved along the saw bar 20 until a desired orientation is reached. The latch 108 is released to allow the latch 108 to engage another notch 60.

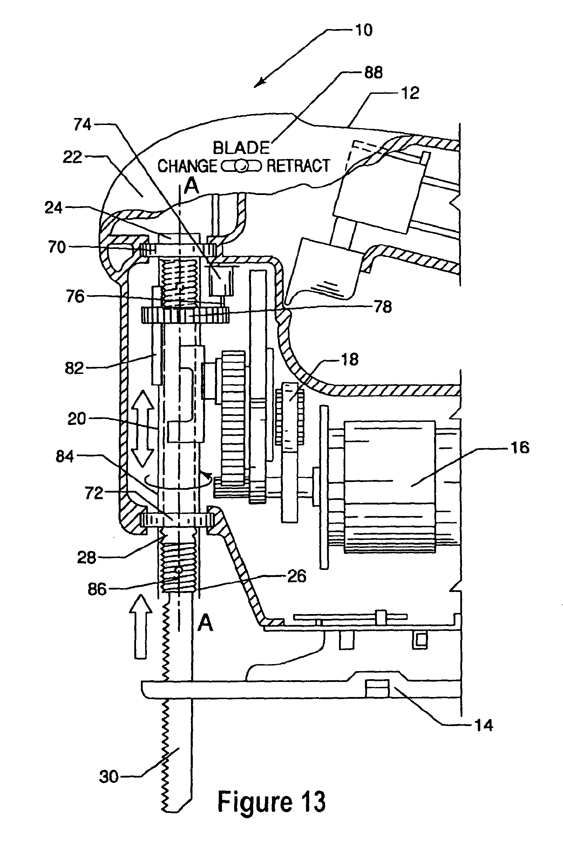

In yet another embodiment, as shown in FIG. 13, the saw bar 20 is rotatable about the longitudinal axis A. A first bearing 70 is coupled with the first end 24 of the saw bar 20 and a second bearing 72 is coupled with the second end 26 of the saw bar 20. The first and second bearings, 70, 72, are disposed within the front portion 22 of the housing 12 and are allowed to rotate freely. A single bearing or elongated collar may be used instead of the first and second bearings 70, 72.

Adjacent to the saw bar 20 is a motor 74 that has an output shaft 76. Coupled to the output shaft 76 is a belt drive 78. The belt drive 78 is also rotatably coupled with a sleeve of the saw bar 20. Also coupled with the sleeve is an elongated member 82. Alternatively, output shaft 76 may have external teeth that engage a gear disposed around the saw bar 20. A switch 88 may be in communication with the motor 74 that allows the motor 74 to rotate in a clockwise and counterclockwise directions.

The second end 26 of the saw bar 20 has a set of internal threads 84 around the inner circumference of the saw bar 20. The threads 84 extend from the second end 26 of the saw bar 20 towards the first end 24 of the saw bar 20. The set of internal threads 84 are threadingly engaged to a set of external threads 86 around the external circumference of the blade clamp 28, or alternatively, the saw blade 30. The blade clamp 28 and the saw blade 30 are rotationally fixed with respect to the saw bar 20.

Alternatively, the blade clamp 28 may have a pin member that is designed to engage a channel disposed along the saw bar 20, where the channel travels from the second end 26 of the saw bar 20 towards the first end 24 of the saw bar 20, where the path of the channel travels in a parallel and non-parallel directions with respect to the longitudinal axis A.

To operate the jigsaw 10, the saw bar 20 is rotated, either manually or mechanically, to allow the blade clamp 28 and the saw blade 30 to extend from the second end 26 of the saw bar 20. The rotation of the saw bar 20 allows the threads 84 between the inner circumference of the saw bar 20 and the threads 86 of the external circumference of the blade holder 28 to extend the blade clamp 28 and the saw blade 30. The saw bar 20 is rotated until the saw blade 30 is extruded from the second end 26 of the saw bar 20, where the saw blade 30 will be in the operative position.

In this position, or any position therebetween, the user may operate the jigsaw 10. If the user wishes to reduce the depth of cut, the user may elect not to fully extend the saw blade 30 from the second end 26 of the saw bar 20.

When the user elects to store the saw blade 30 in the stored position, the user will again rotate the saw bar 20, but this time in the opposite direction than during the extension of the saw blade 30. The blade clamp 28 and the saw blade 30 may be stationary during the rotation of the saw bar 20. The rotation of the saw bar 20 allows the internal threads 84 of the saw bar 20 to "take up" the external threads 86 of the blade clamp 28. If desired, the saw bar 20 may have external threads and the blade clamp 28 may have corresponding internal threads. In this configuration, the extension and retraction of the blade clamp 28 would operate in substantially the same way.

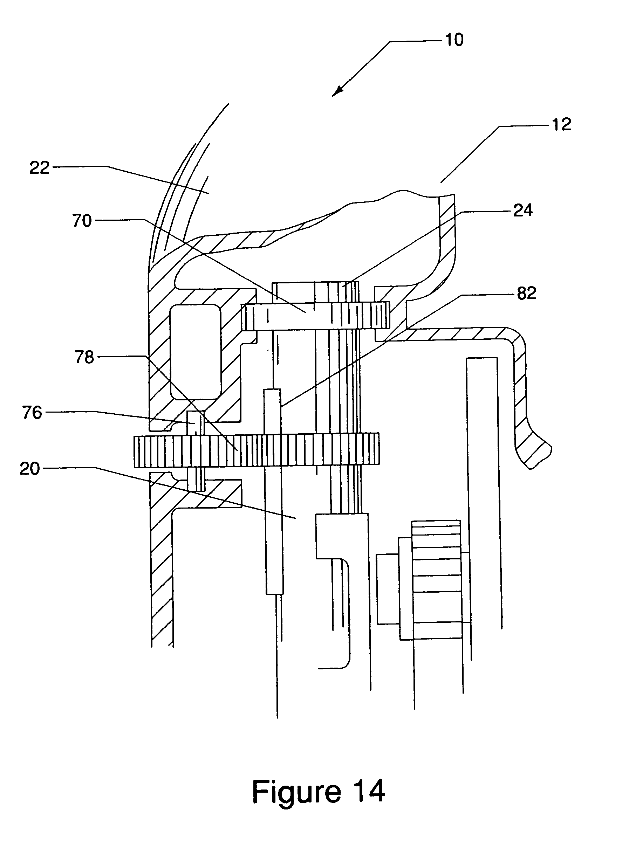

During the cutting process, the elongated member 82 allows the belt drive 78 to stay in rotational contact with the saw bar 20. In addition, the sleeve 80 may be reciprocably coupled with the blade clamp 28, thereby allowing the sleeve and belt drive 78 to remain in rotational contact with the saw bar 20 while the saw bar 20 is reciprocating. Alternatively, the belt drive 78 may be positioned such that a portion of the belt drive 78 extends beyond the front portion 22 of the housing 12 as shown in FIG. 14. In this embodiment, the belt drive 22 may be manually actuated to rotate the saw bar 20.

While the invention has been illustrated and described in detail in the drawings and foregoing description, the same is to be considered as illustrative and not restrictive in character, it being understood that only exemplary embodiments have been shown and described and do not limit the scope of the invention in any manner. It can be appreciated that any of the features described herein may be used with any embodiment. The illustrative embodiments are not exclusive of each other or of other embodiments not recited herein. Accordingly, the invention also provides embodiments that comprise combinations of one or more of the illustrative embodiments described above. Modifications and variations of the invention as herein set forth can be made without departing from the scope thereof, and, therefore, only such limitations should be imposed as are indicated by the appended claims.

When used in this specification and claims, the terms "comprises" and "comprising" and variations thereof mean that the specified features, steps or integers are included. The terms are not to be interpreted to exclude the presence of other features, steps or components.

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilized for realizing the invention in diverse forms thereof.

It is to be understood that, if any prior art publication is referred to herein, such reference does not constitute an admission that the publication forms a part of the common general knowledge in the art, in Australia or any other country.

## Claims

1. A saw comprising:
a housing having a front portion;
a shoe coupled with the housing;
a motor disposed in the housing having a rotary output shaft;
a saw bar disposed in the front portion of the housing and having a first end and a second end that defines a longitudinal axis, the saw bar being coupled to the output shaft;
a blade clamp coupled with the second end of the saw bar; and
a saw blade coupled with the blade clamp and selectively movable between a stored position and an operative position.

2. The saw of claim 1 wherein in the operative position the saw blade is substantially parallel with the longitudinal axis and in the stored position the saw blade is substantially non-parallel with the longitudinal axis.

3. The saw of claim 2 wherein the saw blade is disposed within a portion of the shoe when the saw blade is in the stored position.

4. The saw of claim 1, 2 or 3 further comprising a biasing member coupled with the blade clamp to bias the saw blade towards the shoe.

5. The saw of any preceding claim further comprising a retaining arm pivotally coupled with the housing with a first end adjacent to the saw blade and having a first position and a second position that correspond with the stored position and the operative position of the saw blade.

6. The saw of claim 5 further comprising a shaft having a first end including a cam portion engaged with the retaining arm and a second end including a selector that causes the retaining arm to pivot.

7. The saw of any preceding claim further comprising a locking mechanism to lock the saw blade in one of a stored and operative position.

8. The saw of claim 1 wherein the saw blade is disposed in the front portion of the housing when the saw blade is in the stored position.

9. The saw of claim 8 further comprising a biasing member that biases the saw blade towards the operative position.

10. The saw of claim 9 further comprising a locking mechanism to retain the blade within the front portion of the housing when the saw blade is in the stored position.

11. The saw of claim 10, where the locking mechanism comprises a clamp having a first face and a second face, where the saw blade is adapted to fit therebetween.

12. The saw of claim 1 wherein the blade clamp is slidingly coupled with the saw bar.

13. The saw of claim 12 further comprising a sliding mechanism having a first portion and a second portion, where the first portion is engaged with the blade clamp and the second portion is slidingly engaged with the saw bar.

14. The saw of claim 13 wherein the sliding mechanism further comprises a pin slidingly engaged with the saw bar.

15. The saw of claim 14 further comprising at least a first notch and a second notch disposed along the saw bar, each notch configured to engage with a portion of the pin, such that when the pin is engaged with the first notch, the saw blade is in the stored position and is substantially disposed within the front portion of the housing, and when the pin is engaged with the second notch, the saw blade is in the operative position and is disposed substantially below the front part of the housing.

16. The saw of claim 15 further comprising a biasing member biasing the pin towards the saw bar.

17. The saw of claim 1 wherein the saw bar is configured to receive the saw blade such that in the operative position the saw blade is at least partially extended from the second end of the saw bar and when in the stored position the saw blade is disposed within the saw bar.

18. The saw of claim 17 wherein the blade clamp further comprises a first end and a second end, where the first end has a threaded portion and is threadingly engaged with the saw bar and the second end is configured to couple with the saw blade, such that rotation of the saw bar in a first direction retracts the saw blade within the second end of the saw bar to the stored position, and the rotation of the saw bar in a second direction extrudes the blade clamp and the saw blade from the second end of the saw bar to the operative position.

19. The saw of claim 18 further comprising a motor coupled with the saw bar, such that the motor rotates the saw bar about the longitudinal axis of the saw bar, in either the first direction or the second direction.

20. The saw of claim 19 further comprising a motor coupled with the saw bar such that the motor rotates the saw bar about the longitudinal axis of the saw bar.

21. A saw substantially as hereinbefore described and as illustrated in the accompanying drawings.
